# EUROPÄISCHE PATENTSCHRIFT

(11) **EP 2 354 341 B1**
(45) Veröffentlichungstag und Bekanntmachung des Hinweises auf die Patenterteilung: **07.04.2021**
(21) Anmeldenummer: 11000830.7
(22) Anmeldetag: 02.02.2011
(51) Int. Cl.: E03F 5/06

(54) **Ablaufrinne mit höhenverstellbarer Abdeckung**
Drainage gutter with a height-adjustable cover
Goulotte dotée d'un recouvrement réglable en hauteur

(30) Priorität: 05.02.2010 DE 202010002011 U
(43) Veröffentlichungstag der Anmeldung: 10.08.2011
(73) Patentinhaber: Sanipat GmbH, 6045 Meggen (CH)
(72) Erfinder: GASSMANN, Urs, 6343 Rotkreuz (CH)
(74) Vertreter: Reb, Carina

(56) Entgegenhaltungen:
- EP-A2- 1 647 642
- CH-B1- 698 575
- DE-U1-202006 014 959
- DE-U1-202006 014 959
- DE-U1-202009 012 621
- DE-U1-202009 012 621

## Beschreibung

Die vorliegende Erfindung betrifft ein Ablaufrinnen-System, wie es im Sanitär- und Hydrotechnikbereich Verwendung findet, insbesondere bei der Montage bzw. der Herstellung von vorfabrizierten oder vor Ort erstellten Duschgefällsböden.

Solche Ablaufrinnen-Systeme umfassen in der Regel einen Wasser abführenden, trogähnlichen Kanal bzw. eine annähernd konkav ausgeformte Ablaufrinne und eine Abdeckung, die auf oder in die Ablaufrinne auflegbar ist und meist eben und bündig mit dem Duschboden abschließt. Hierfür weisen die Ablaufrinnen entweder Tragrahmen oder -sockel auf, die eine vorzugsweise mittels Nivellierschrauben in der Höhe adaptierbare Auflage für die Abdeckung ergeben.

Nachteilig ist hierbei, dass die Tragrahmen oder -sockel den freien Wasserabfluss behindern und durch ihren Widerstand die Schaumbildung erhöhen. Sie sind somit Barrieren für den freien Abfluss von Haaren, Seifen- und Schmutzpartikel. Nebst einer nicht optimalen Abflussleistung sind eine regelmäßige Verschmutzung und entsprechende hygienische Risiken die Folge. Die Ablaufrinnen bedürfen somit einer regelmäßigen Reinigung, die wiederum aufgrund der fix befestigten oder eingelegten Tragrahmen oder -sockel einen erheblichen Mehraufwand erfordert.

Weiterhin nachteilig ist bei bekannten Ablaufrinnen, dass sie über ein einfaches Querschnittsprofil mit nur 2-3 Rinnen-Innenflächen verfügen, z.T. ohne jede oder nur ungenügender Gefällsausbildung für eine einwandfreie, durchgehende Wasserabführung. Die Folge ist stehendes Wasser in gewissen Rinnenabschnitten, Fleckenbildung durch Kalk-, Seifen- und Schmutzablagerungen, was wiederum den freien Abfluss des Wassers behindert oder gar Trink- und Brutplatz für diverses Ungeziefer darstellen kann.

Die Montage der Ablaufrinnen erfolgt in der Regel mit höhenverstellbaren Nivellier-Schrauben oder -Tragsockeln, die auf dem festen Boden verschraubt werden. Allerdings mit dem Nachteil, dass bei Setzungen vor Ort erstellter Duschböden bzw. umgebender Unterlagsböden (z.B. durch Materialschwund wegen Bauaustrocknung), die Ablaufrinnen auf der einmal eingestellten, montierten Schrauben- bzw. Sockelhöhe verbleiben. Die Folge davon sind Rissbildungen rund um die Ablaufrinne und das Risiko von Plattenschäden, Dichtfugenabrissen und Wasserschäden.

Aus der CH 698 575 B1 ist eine Ablaufvorrichtung bekannt, bei der die Ablaufrinne im Querschnitt aus vier Flächen gebildet ist, nämlich aus zwei senkrechten und zwei schrägen. Auf die Absätze oder die Schultern, die zwischen den jeweiligen senkrechten und schrägen Flächen gebildet sind, werden Klemmspangen aufgesetzt, die wiederum jeweils eine höhenverstellbare Auflage für eine Abdeckung aufweisen. Dadurch jedoch, dass die Ablaufrinne keine fünfte, das Gefälle ausgleichende Fläche hat, müssen entweder in einer ersten Variante die senkrechten Flächen trapez- bzw. keilförmig ausgestaltet sein oder in einer zweiten Variante die schrägen Flächen einen Winkel bilden, der zum Abfluss hin immer spitzer wird. Bei der ersten Variante ist nachteilig, dass dann die Absätze bzw. die Schultern zu der Oberfläche der Ablaufrinne nicht parallel verlaufen und somit die Klemmspangen unterschiedlich gross sein müssen, um das Gefälle auszugleichen. Die zweite Variante hat strömungstechnische Nachteile, sowie eine nachteilige Bauhöhe.

Die Gebrauchsmusterschrift DE 20 2009 012 621 U1 offenbart eine Ablaufrinne mit einer Abdeckung, wobei die Ablaufrinne im Querschnitt ebenfalls aus zwei senkrechten und zwei jeweils daran anschließenden schrägen Flächen gebildet ist. Die Stützelemente, die in die Ablaufrinne einsetzbar sind und auf die die Abdeckung auflegbar ist, müssen ebenfalls das Gefälle ausgleichen und bieten zudem keine Höhenverstellbarkeit, beispielsweise mittels einer Nivellierschraube.

Die Offenlegungsschrift EP 1 647 642 A2 zeigt eine Ablaufvorrichtung mit einer Abdeckung, die auf Schrauben höhenverstellbar ist. Nachteilig ist hier jedoch, dass die Schrauben an dem Rinnenboden angeschweißt sind und er somit für den ungehinderten Abfluss des Abwassers nicht frei bleibt. Dieser Ablaufvorrichtung sind im Querschnitt schräge Rinnenflächen fremd und somit gibt es auch keine Absätze oder Schultern, auf denen Stützelemente oder brückenähnliche Einlageteile einsetzbar wären.

Eine weitere Gebrauchsmusterschrift DE 20 2006 014 959 U1 offenbart Rinnenformen, die senkrechte und schräge Stützflächen aufweisen, allerdings werden keine höhenverstellbaren Stützelemente oder höhenverstellbare, brückenähnliche Einlageteile eingesetzt, sondern Distanzstücke, zu dem Zweck, eine möglichst ästhetische Abdeckplatte so in einem Rahmen zu fixieren, dass ein umlaufend gleichbreiter Einlaufschlitz zwischen Rahmen und Abdeckplatte gewährleistet ist.

Die Aufgabe der vorliegenden Erfindung ist, ein Ablaufrinnen-System zu stellen, das die oben beschriebenen Nachteile weitestgehend vermeidet und hinsichtlich seiner späteren Eigenschaften im montierten Betriebszustand, aber auch hinsichtlich seiner Montierbarkeit optimiert ist. Zudem soll das Ablaufrinnen-System in jeder beliebigen Länge herstellbar sein.

Die Lösung der Aufgabe besteht zunächst in der Anordnung und Konzeption einer Ablaufrinne, die in ihrem Querschnittsprofil mindestens fünf unterschiedliche Flächen ausbildet. Zwei davon bilden eine V-förmige Vertiefung und zwei weitere Flächen schließen jeweils an den Flanken des Vs annähernd senkrecht an. Die Ablaufrinne ist vorzugsweise einstückig, beispielsweise aus rostfreiem Stahlblech, mit den entsprechenden Abbügen gebogen, gepresst, tiefgezogen oder gegossen oder aber auch aus Kunststoff, gegossen oder spritzgegossen.

Die vorzugsweise symmetrisch gegenüberliegenden Abbüge bzw. die Winkel zwischen den schrägen Flanken des V-förmigen Querschnittsprofils und den annähernd senkrechten Stützflächen bilden nur in ihrem oberen Bereich erfindungsgemäß eine Auflage bzw. Stützfläche für mindestens zwei im Querschnitt korrespondierend ausgeformte brückenähnliche Einlageteile. Diese brückenähnlichen Einlageteile wiederum dienen erfindungsgemäß als Auflage für eine Ablaufrinnen-Abdeckung und lassen vorteilhafterweise das V-förmige Querschnittsprofil der Ablaufrinne frei für einen ungehinderten Wasserabfluss, der auf keine Tragrahmen oder -sockel oder ähnliche Teile trifft, die in dem Zusammenschluss der zwei Flanken des V-förmigen Querschnittsprofils angeordnet wären. Die Flanken des V-förmigen Querschnittsprofils können alternativ auch konkav ausgebaucht sein, sodass sich in etwa ein Querschnittsprofil eines offenen Us ergibt. Die Stütz- bzw. Auflageflächen oder vielmehr Auflagepunkte für die brückenähnlichen Einlageteile können optional auch als punktuell angeordnete Haken oder als eine sich über die gesamte Längenausdehnung der Ablaufrinne erstreckende hakenförmige Rinne ausgestaltet sein.

Eine erfindungsgemäße Ablaufrinne weist ein Querschnittsprofil auf, das nebst den vier Flächen eine fünfte Fläche ausbildet, die den im Querschnitt spitz zulaufenden Winkel zwischen den beiden Flanken des V-förmigen Querschnittsprofils annähernd horizontal abstumpft. Diese im Querschnitt annähernd horizontal ausgebildete fünfte Fläche oder Abflussfläche ist in der Längsausrichtung der Ablaufrinne geneigt angeordnet. Auf diese Weise ist erfindungsgemäß eine Gefällsausbildung gewährleistet, die jeweils zu einem mittig angeordneten Abfluss oder zu einem seitlich angeordneten Abfluss oder jeweils zu mehreren Abflüssen geneigt ausgerichtet ist.

Die fünfte Fläche oder Abflussfläche einer erfindungsgemäßen Ablaufrinne kann rechteckig sein, ist jedoch vorzugsweise zum Abfluss hin spitz zulaufend, d.h. sich verschmälernd ausgebildet. Dadurch erhöht sich die Fließgeschwindigkeit des Duschwassers in Richtung des Abflusses und dieses wiederum verhindert das Ansetzen von Haaren oder Seifen- oder Schmutzpartikeln. Des Weiteren erzeugt die sich erhöhende Fließgeschwindigkeit vorteilhafterweise eine Sogwirkung für das Duschwasser in den Endbereichen der Ablaufrinne.

Des Weiteren kann ein erfindungsgemäßes Ablaufrinnen-System eine Ablaufrinne umfassen, die in ihrem Querschnittsprofil nicht nur aus den beschriebenen fünf Flächen gebildet ist, sondern an der Oberkante der annähernd senkrechten Stütz- bzw. Führungsflächen für die brückenähnlichen Einlageteile jeweils horizontal anschließende Auflageflächen bzw. Flansche ausbildet. Diese Flansche dienen der Auflage auf Ausgleichsschichten wie Beton, Unterlagsböden u. dgl. sowie als Klebeflächen hierauf und auch als Klebeflächen für Abdichtungen und Bodenplatten bzw. Fliesen. Die Flansche sind in ihrer Breite variabel herstellbar, sodass unterschiedlich breite Abläufe realisierbar sind, vorzugsweise ohne die Breite der Ablaufrinne selbst, der brückenähnlichen Einlageteile und der Abdeckplatte in der Breite verändern zu müssen.

Die Flansche können an allen vier Seiten der Ablaufrinne gleichbreit ausgestaltet sein, aber auch unterschiedlich breit an den Längs- oder den Breitseiten, sodass mit dem jeweils schmäleren Flansch die Ablaufrinne möglichst nahe an den Rand der Duschbodenplatte zwischen Duschbodenplatte und Anschlusswand gesetzt werden kann. Dieses vermeidet größere horizontale Restbodenflächen, auf denen Wasser stehen kann, sowie aufwändige Anschlussarbeiten bzw. Kleinstflächenausbildung durch den Plattenleger. Eine Optimierung des Rinnenverbundes mit dem Untergrund, insbesondere mit zementösen Materialien, wird durch das Aufkleben von haftungsoptimierenden Verankerungsteilen auf der Rinnen- und/oder Auflagenflächen-Unterseite bzw. Flansch-Unterseite erreicht. Als solche haftungsoptimierende Verankerungsteile kommen partiell oder vollflächig aufgeklebte Klettbänder, Bolzen oder Schrauben, die Applikation einer Besandung an der Flansch-Unter- oder -Oberseite, ein Aufkleben eines grobkörnigen Schleifpapiers oder anderer grobkörniger Oberflächen in Betracht.

Des Weiteren kommt für einen optimierten Sitz, aber auch für Schallisolation ein Unterbau als Bestandteil eines erfindungsgemäßen Ablaufrinnen-Systems in Betracht, der das unterseitige Profil der Ablaufrinne formschlüssig umschließt bzw. die Ablaufrinne einbettet.

Des Weiteren kann eine erfindungsgemäße Ablaufrinne optional in ihrem Querschnittsprofil eine achte Fläche aufweisen, die an dem Rand eines Flansches durch einen annähernd senkrecht angeordneten Auf- oder Abbug gebildet ist. Diese Fläche kann einer zusätzlichen Befestigungsmöglichkeit (z.B. Verschraubung oder Verklebung) der Ablaufrinne dienen. Ist ein Aufbug angeordnet, dient dieser als sogenanntes Wandanschlussbord zur Sicherheit gegen Schlagwasser und Wasserschäden. Dieses Bord kann überlappend befliest werden. Für entsprechende Einbausituationen kann es vorteilhaft sein, dass die Ablaufrinne mehrere Aufbüge oder mehrere Abbüge oder eine Kombination hiervon aufweist. Weiterhin weisen alle Auf- oder Abbüge, aber auch die Flansche der Ablaufrinne vorzugsweise Bohrungen als Montage- bzw. Klebelöcher auf.

Die annähernd senkrechten Auf- oder Abbüge können sowohl an der Außenseite der Flansche, als auch an der Innenseite angrenzen. In letzterem Falle stellen sie als Aufbug einen Anschlag für das Verfliesen bis an eine oder alle Kanten der Vertiefung der Ablaufrinne dar.

Die beschriebenen annähernd senkrechten Auf- und Abbüge sind auch realisierbar, indem ein entsprechendes Profil mit diesen annähernd senkrechten Auf- oder Abbügen an die Oberseite oder vorzugsweise an die Unterseite des Ablaufrinnen-Profils angeklebt, gelötet, angeschweißt oder verschraubt wird. Dadurch ergeben sich weitere Justiermöglichkeiten in drei Ebenen für eine optimierte Anpassung der Ablaufrinne an eine Wand, an einen bauseitig eingebrachten Boden oder an einen Duschboden.

Wie schon erwähnt, weist eine erfindungsgemäße Ablaufrinne mindestens ein Abflussloch auf, das zur Wasserabführung einen durch Verschraubung, Verschweißung oder Verklebung schräg oder senkrecht angeordneten und nahtlos bzw. dicht verbundenen Ablaufstutzen aufweist. Auf diesen ist ein Ablaufgehäuse oder Siphongehäuse mit oder ohne Adapter aufsteck- bzw. aufschraubbar. Zur Einsatzmöglichkeit diverser Ablaufgehäuse mit jeweils verschiedenen Aufnahmelochdurchmessern, können am Ablaufstutzen aufschraubbare Adapter oder aufgestülpte Anpassungs-Adapter eingesetzt werden. Der in das Ablaufgehäuse ausgeübte Wasserdruck, Vibrationen, Druck- und Zugbelastung des fest angeschweißten bzw. aufgeschraubten Ablaufrohres oder Montagemängel können das Ablaufgehäuse vom Rinnenablaufstutzen trennen und somit weitere Duschvorgänge verunmöglichen. Eine weitere erfindungsgemäße Ausstattung der Ablaufrinne ist eine Sicherung des Siphongehäuses mittels Halterungen, die an den vorfabrizierten bzw. vor Ort erstellten Duschböden an der Unterseite der Ablaufrinne selber angeordnet sind. Diese Ösenhalterungen dienen der Aufnahme von Gummi-, Kunststoff- oder anderen Stützbändern, die so das Siphongehäuse an der Ablaufrinne fixieren.

Der oder die Abflussstutzen sind im Querschnitt vorzugsweise kreisförmig, es sind aber auch alle anderen erdenklichen geometrischen Grundformen denkbar. Entscheidend ist der dichte Sitz des Abflussstutzens in einer Aufnahme eines Siphongehäuses, das übrigens auch als fester Bestandteil eines erfindungsgemäßen Ablaufrinnen-Systems in dieses integriert sein kann.

Aufgrund der gleichmäßig breiten Ausgestaltung der Ablaufrinne sind die brückenähnlichen Einlageteile an jeder beliebigen Stelle der Ablaufrinne einsetzbar. Für einen optimierten Seitenhalt der brückenähnlichen Einlageteile kann allerdings aber auch optional eine Stecknut in den annähernd senkrechten Flächen der Ablaufrinne oder an den Seitenflächen der brückenähnlichen Einlageteile vorgesehen sein, in die Federn an den Seitenflächen der brückenähnlichen Einlageteile oder an den annähernd senkrechten Flächen der Ablaufrinne eingesteckt werden können. Optimierter Seitenhalt der brückenähnlichen Einlageteile ist weiterhin optional auch durch leicht keilförmig ausgebildete Seitenflächen der brückenähnlichen Einlageteile erreichbar, die unter leichtem Druck einsetzbar sind.

Des Weiteren weisen die erfindungsgemäßen brückenähnlichen Einlageteile mindestens ein Gewinde - vorzugsweise in Form einer in das Material der brückenähnlichen Einlageteile eingebetteten Messing-Gewindehülse - auf, in die eine Nivellierschraube mit einem flachen Auflagerondell oder Auflage-Vieleck als Kopf stufenlos einschraubbar ist. Dieses Auflagerondell oder Auflage-Vieleck oder dieser Auflage-Kopf bildet somit eine höhenjustierbare Auflage für eine U-förmige Abdeckplatte, die auf den Auflage-Kopf aufstülpbar ist. Die Öffnung des (umgekehrten) Us der Abdeckplatte ist vorzugsweise geringfügig breiter als der Durchmesser des Auflage-Kopfes, sodass dadurch ein sicherer Halt der Abdeckplatte gewährleistet ist. Die obere Fläche des Auflage-Kopfes oder/und die untere Fläche der im Querschnitt U-förmigen Abdeckplatte, mit der die Abdeckplatte auf die obere Fläche des Auflage-Kopfes aufgelegt wird, können optional als Klebeflächen ausgestaltet sein.

Insbesondere für besonders breite Ablaufrinnen mit entsprechend breiten Ausführungen von Abdeckplatten kann es für deren Stabilität von Vorteil sein, nicht nur eine, sondern zwei oder mehrere parallel angeordnete Nivellierschrauben mit flachem Auflage-Kopf in jedem brückenähnlichen Einlageteil vorzusehen. Bei Ausführungen der brückenähnlichen Einlageteile mit zwei parallelen Nivellierschrauben mit flachem Auflage-Kopf ist die Öffnung des Us der Abdeckplatte geringfügig breiter als die Summe der Durchmesser der Auflage-Köpfe und des Abstandes zwischen den Durchmessern.

Die brückenähnlichen Einlageteile können optional selbst als Quetschhalter gemäß Absatz [0019] ausgestaltet sein, indem die Nivellierschraube mit flachem Auflage-Kopf bis zum Anschlag des Auflage-Kopfes eingeschraubt wird, ein U-förmiges Blechstück mit einer Bohrung auf das Gewinde der Nivellierschraube mit flachem Auflage-Kopf aufgesetzt wird und mit einer Mutter so angezogen wird, dass das vorzugsweise elastische Material des brückenähnlichen Einlageteils seitlich zwischen den annähernd senkrechten Flächen der Ablaufrinne verpresst wird. Nach Setzung des Duschbodens und Demontage der Wandbefestigung können die Mutter und das U-förmige Blechstück wieder entfernt werden.

Die Abdeckplatte ist, wie die Ablaufrinne auch, vorzugsweise aus rostfreiem Stahlblech gefertigt, aus vollem Material oder mit beliebigen Lochbildern oder mit einer Gitterstruktur. Die Abdeckplatte kann beschichtet sein und eine Aufnahme für einen Glas- oder Keramik-Einsatz aufweisen oder aber auch komplett aus den letztgenannten Materialien bestehen.

Die Abdeckplatte, gleich aus welchem Material, ist an allen vier Seiten gleichmäßig schmäler als die Vertiefung der Ablaufrinne, sodass ein hinreichend breiter Spalt zum Abfluss des Wassers verbleibt. Der Anschluss der Keramikplatten, Fliesen bzw. anderer Duschbodenbeläge erfolgt meistens an dem Rand der Ablaufrinnen-Kante oder an einem an der Ablaufrinnen-Kante integrierten Bord. In allen Fällen kann auf Seite des Duschbodens ein einwandfreier, maßgenauer Anschluss des Duschbodenbelages an der Ablaufrinnen-Kante oder an dem Bord erreicht werden. Sind die Ablaufrinnen bzw. deren Flansche - mit oder ohne Auf- oder Abbug - jedoch satt an Wände oder Simse anzuschließen, stellt sich das Problem der Aufnahme verschieden dicker Wandbeläge bzw. der Anschlussdetails an die Wände und Simse. Die maßliche Einheit der Flanschbreite und der Wandbelagsstärke muss vor dem Ablaufrinnen-Einbau in Einklang gebracht werden, was wegen späterer Entscheidungsfindung der Bauträger hinsichtlich der Keramikplatten- bzw. Fliesen in den meisten Fällen nicht möglich ist. Es sind Ablaufrinnen mit verstellbaren Flanschteilen bzw. verstellbaren Flanschborden bekannt. Diese haben jedoch den großen Nachteil, dass im Rohbau eingebaute, mit Gefällsbeton o.ä. unterfütterte Ablaufrinnen nicht mehr verstellt werden können. Die zeitlich meist später, erst nach dem Rohbaustadium erfolgende Wahl der Wand- und Bodenbeläge ist dann an die Einbausituation der Ablaufrinne gebunden, es sei denn, man nimmt bei nachträglicher Wahl dünnerer Wandplatten eine überdimensionierte Anschlussfuge bzw. bei nachträglicher Wahl dickerer Wandplatten eine Überdeckung der Rinnenöffnung in Kauf. Demzufolge ist bei einer erfindungsgemäßen Ablaufrinne vorgesehen, dass die Flanschbreite - mit oder ohne Auf- oder Abbug - an das gängigste Dickenmaß von z.B. Natursteinplatten angepasst ist. Um rund um die Abdeckplatte einen optisch gleichmäßigen Spalt für den Wasserabfluss zu erreichen, ist als Abdeckplatte ein U-förmiges Profil mit einer aufgesetzten Oberseite bzw. Deckfläche vorgesehen, die mittels einer ein- oder mehrseitigen Überlappung über das tragende U-Profil die diversen Dickenmaße der gewählten Wandbeläge bzw. seitlichen Wand- oder Simsanschlüsse zu Gunsten eines guten Erscheinungsbildes des Rinnenanschlusses maßlich kompensiert.

Abdeckplatten, die z.B. vorzugsweise aus Stahl, Glas, Keramik oder sonstigen harten Materialien, sowie aber auch aus Holz gefertigt sind, erzeugen durch den Wasseraufprall Schall, der durch den Resonanzeffekt des Rinnen-Hohlkörpers auch noch verstärkt wird. Demzufolge ist die Nivellierschraube sowie deren flache Auflage-Kopf als tragendes Teil der Abdeckplatte zur Schallentkoppelung aus Kunststoff und das brückenähnliche Einlageteil vorzugsweise aus einem elastischen Kunststoff oder Gummi gefertigt.

Duschwasserabläufe bedürfen gleich wie z.B. Lavabos eines Abflusssiebes, damit beispielsweise Fingerringe oder andere Wert- oder Schmuckgegenstände nicht in den Ablaufsiphon oder gar in die Kanalisation gelangen können. Baunormen schreiben Ablaufsiebe teilweise vor. Insbesondere in öffentlichen Bauten oder Hotels oder Spitälern oder Heimen sind Abflusssiebe wichtig für den Ausschluss von Haftungsansprüchen. Gemäß Stand der Technik werden Abflusssiebe in Form von Siebkörben mittels eines den Durchmesser des Abflusses überragenden Kragens oder mit mindestens drei diametral angeordneten Füßen in den Abfluss eingesetzt. Dieses behindert jedoch wiederum den freien, ungehinderten Abfluss des Wassers, die Siebe können verstopfen, verloren gehen oder aus Nachlässigkeit nicht mehr eingesetzt werden.

Um diese Nachteile zu beseitigen, sieht ein erfindungsgemäßes brückenähnliches Einlageteil eine entsprechend lang ausgestaltete und zentral angeordnete Nivellierschraube vor, an deren unterem Gewindeteil ein Abflusssieb oder ein Siebkorb oder ein Siebring mit einem oder mehreren Nabenverbünden aufschraubbar ist. Eine solche, den übrigen Rinneneinlagen angepasste Siebvorrichtung löst den Bedarf einer Auffangvorrichtung für angeschwemmte Gegenstände effizient und kann ebenso mit gleicher Funktion als brückenähnliches Einlageteil für die Abdeckplatte, jedoch in einem Stück, kombiniert als Siebvorrichtung, in die Ablaufrinne eingelegt werden. Die Siebvorrichtung am unteren Teil des verlängerten Gewindebolzens ist vorteilhafterweise zum besseren Wasserabfluss vom Niveau der untersten Ablaufrinnen-Fläche vertieft und mittig im Ablaufstutzen positioniert. Dieses erfindungsgemäße, mit einer Siebvorrichtung kombinierte brückenähnliche Einlageteil erlaubt somit mit einem einzigen Einlageteil sowohl die Abdeckplatte, als auch das Ablaufsieb auf die gewünschte bzw. erforderliche Höhe einzustellen.

Eine optionale Ausgestaltungsvariante eines brückenähnlichen Einlageteils mit kombinierter Siebvorrichtung sieht eine zweite Gewindefassung vor, die an dem brückenähnlichen Einlageteil an seiner Unterseite zentral angeordnet ist. Falls die Gewindefassung für die Nivellierschraube mit dem flachen Auflage-Kopf bereits zentral angeordnet ist, ist diese zweite Gewindefassung axial in der Nivellierschraube selbst in einer Gewindebohrung mit kleinerem Durchmesser als der Außendurchmesser der Nivellierschraube angeordnet. Diese zweite Gewindefassung dient erfindungsgemäß der Aufnahme einer zweiten, dünneren Schraube oder Gewindestange, an deren unterem Ende ein Abflusssieb aufgeschraubt ist. Somit ergibt sich erfindungsgemäß durch Platzieren eines dergestalt ausgeformten brückenähnlichen Einlageteils zentral über dem Abflussstutzen die Möglichkeit, das Abflusssieb in dem Abflussstutzen anzuordnen, aber erneut ohne gegenseitige Berührung von Abflusssieb und Abflussstutzen.

Diese erfindungsgemäße, aus beiden beschriebenen Abflusssieb-Befestigungsarten resultierende "schwebende" Anordnung eines Abflusssiebes bringt einerseits den Vorteil eines verbesserten, freien Abflusses und andererseits den Vorteil, dass das Abflusssieb beim Reinigen nicht separat entfernt und wieder eingesetzt werden muss, sondern mit einem Teil fest verbunden ist, das beim Reinigen sowieso entfernt werden muss. Ein weiterer Vorteil ist eine grobmaschigere und filigranere Ausgestaltung des Abflusssiebes selbst, weil es mangels Einlegens in den Abflussstutzen keiner relativ dicken Gitterwandungen bedarf. Dieses kommt wiederum einer Verbesserung der Abflussleistung zugute.

An dem zweiten Gewinde, demjenigen der Schraube oder Gewindestange für das Abflusssieb ist vorzugsweise eine Kontermutter angeordnet, sodass entweder gegen den Widerstand des unteren Endes der Nivellierschraube mit dem flachen Auflage-Kopf oder gegen den Widerstand des unteren Endes der Gewindefassung für die Nivellierschraube mit dem flachen Auflage-Kopf eine Fixierung des Abflusssiebes in einer optimalen Einstellhöhe in dem Abflussstutzen ermöglicht ist. Die Gitterstruktur des Abflusssiebes ist zugunsten eines freien Abflusses so groß wie möglich, aber wiederum nicht so groß, dass beispielsweise ein Fingerring durchpassen würde. Das Gleiche gilt umgekehrt für den Außendurchmesser des Abflusssiebes, der so klein wie möglich gewählt ist, aber nicht so klein, dass seitlich durch den Spalt zwischen Abflusssieb und Wand des Abflussstutzens beispielsweise ein Fingerring passen würde.

Wie schon erwähnt, ist es jedoch auch möglich, als alternative Abflusssieb-Befestigung, das Gewinde der Nivellierschraube mit dem flachen Auflage-Kopf so lang auszugestalten, dass es unter Umständen sogar in den Abflussstutzen hineinragt und das Abflusssieb als Mutter auf diesem Gewinde in der gewünschten Höhe über oder in dem Abflussstutzen eingestellt werden kann und vorzugsweise in dieser Position mit einer Kontermutter fixiert wird. Ein absichtlich selbstsicherndes, bzw. leicht schwergängiges Gewinde kann die Verwendung der Kontermutter überflüssig machen.

Das erfindungsgemäße Ablaufrinnen-System umfasst bei kürzeren Rinnenlängen und einem Rinnenabflussloch ein Rinneneinlageset von mindestens drei brückenähnlichen Einlageteilen für die Abdeckplatte, wovon einer, wie vorgenannt beschrieben, mit einem integrierten Abflusssieb ausgerüstet ist. Längere Ablaufrinnen, mit ebenfalls nur einem Rinnenabflussloch, bedürfen entsprechend mehrerer brückenähnlicher Einlageteile, wovon ebenfalls nur eines mit einem integrierten Abflusssieb ausgerüstet ist. Je nach anfallender Wassermenge (z.B. Regenduschen) ist für eine entsprechende Wasserabflussleistung zu sorgen. Diese kann durch ein leistungsfähiges Siphongehäuse oder durch zwei oder mehr Rinnenablauflöcher und entsprechend zwei oder mehr Siphongehäuse erreicht werden. In diesen Fällen ist entsprechend pro Anzahl Rinnenablauflöcher je ein brückenähnliches Einlageteil mit integriertem Abflusssieb einzusetzen.

Des Weiteren kann ein erfindungsgemäßes Ablaufrinnen-System mindestens zwei verstellbare Sockelhalter umfassen, auf denen die Ablaufrinne positionierbar ist. Ein Sockelhalter besteht grundsätzlich aus zwei Sockelteilen, die mittels Schraubverbindungen in entsprechenden Langlöchern eine Verstellung entlang zweier Achsen erlaubt. Durch entsprechend breite Langlöcher oder durch bogenförmig ausgeformte Langlöcher kommt wahlweise eine begrenzte Verstellbarkeit um eine Schwenkachse hinzu.

Die Sockelteile sind so ausgeformt, dass sie wahlweise eine Verbindung mit einem annähernd waagerechten Boden oder einer annähernd senkrechten Wand ermöglichen. Die Sockelteile weisen hierfür Flächen auf, die vorzugsweise für eine Verklebung mit dem Boden oder der Wand Bohrungen aufweisen. Diese Klebeflächen sind weiterhin vorzugsweise mit einem schallisolierenden Schaumstoff umgeben.

Weitere oder vorteilhafte Ausgestaltungen eines erfindungsgemäßen Ablaufrinnen-Systems bilden die Gegenstände der abhängigen Ansprüche.

Die Bezugszeichenliste ist Bestandteil der Offenbarung.

Anhand von Figuren wird die Erfindung symbolisch und beispielhaft näher erläutert. Die Figuren werden zusammenhängend und übergreifend beschrieben. Sie stellen schematische und beispielhafte Darstellungen dar und sind nicht maßstabsgetreu, auch in der Relation der einzelnen Bestandteile zueinander nicht. Gleiche Bezugszeichen bedeuten gleiche Bauteile, Bezugszeichen mit unterschiedlichen Indizes geben funktionsgleiche oder ähnliche Bauteile an.

Es zeigen dabei
Fig. 1 eine schematische und perspektivische Darstellung einer Basisvariante eines erfindungsgemäßen Ablaufrinnen-Systems;
Fig. 2 eine schematische und perspektivische Darstellung einer zweiten Ausgestaltungsvariante eines erfindungsgemäßen Ablaufrinnen-Systems;
Fig. 3a eine schematische und perspektivische Darstellung eines erfindungsgemäßen Sockelhalters links
Fig. 3b eine schematische und perspektivische Darstellung eines erfindungsgemäßen Sockelhalters rechts
Fig. 4 eine schematische und perspektivische Darstellung einer dritten Ausgestaltungsvariante eines erfindungsgemäßen Ablaufrinnen-Systems;
Fig. 5 eine schematische und perspektivische Darstellung einer Basisvariante einer erfindungsgemäßen Ablaufrinne;
Fig. 6 eine schematische und perspektivische Darstellung einer zweiten Ausgestaltungsvariante einer erfindungsgemäßen Ablaufrinne;
Fig. 7 eine schematische und perspektivische Darstellung einer dritten Ausgestaltungsvariante einer erfindungsgemäßen Ablaufrinne;
Fig. 8 eine schematische und perspektivische Darstellung einer vierten Ausgestaltungsvariante einer erfindungsgemäßen Ablaufrinne;
Fig. 9 eine schematische und perspektivische Darstellung eines erfindungsgemäßen brückenähnlichen Einlageteils;
Fig. 10 eine schematische und perspektivische Darstellung der Ablaufrinne aus der Fig. 4 mit vier eingelegten brückenähnlichen Einlageteilen und
Fig. 11 eine schematische und geschnitten dargestellte Ansicht einer Ablaufrinne mit eingelegtem brückenähnlichen Einlageteil und mit einer erfindungsgemäßen Befestigung für ein Abflusssieb.

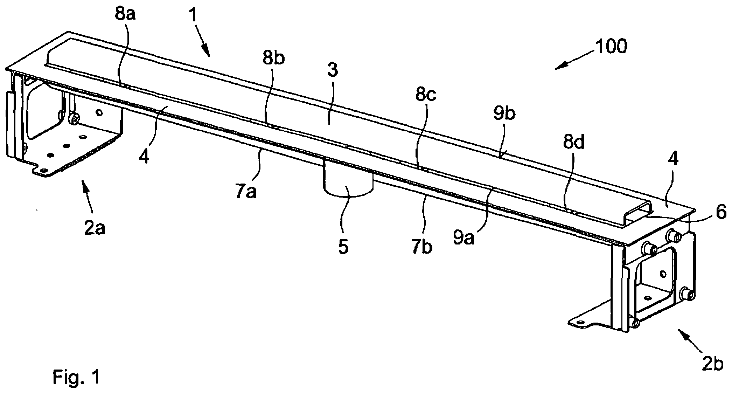

Die Fig. 1 zeigt eine schematische Darstellung eines erfindungsgemäßen Ablaufrinnen-Systems 100, das im Wesentlichen eine Ablaufrinne 1, einen linken Sockelhalter 2a, einen rechten Sockelhalter 2b und eine Abdeckplatte 3 umfasst. Die Ablaufrinne 1 liegt mit einem annähernd waagerecht ausgeformten Flansch 4 auf den Sockelhaltern 2a und 2b auf und weist des Weiteren einen mittig angeordneten Abflussstutzen 5 auf. Die Ablaufrinne 1 weist des Weiteren eine konkave Vertiefung 6 mit Rinnen-Unterseiten 7a und 7b auf, die in einem Gefälle zu dem Abflussstutzen 5 angeordnet sind.

Die Abdeckplatte 3 ist u-förmig ausgeformt und kann auf in dieser Darstellung nur andeutungsweise erkennbare brückenähnliche Einlageteile 8a-8d aufgestülpt werden, sodass im montierten Zustand an beiden Seiten der Abdeckplatte 3 zu den Rändern der Vertiefung 6 jeweils ein Abfluss-Spalt 9a bzw. 9b offen bleibt.

Die Sockelhalter 2a und 2b sind höhenverstellbar, sodass grundsätzlich nach Belieben der Flansch 4 befliest werden kann und die Abdeckplatte 3 mittels der brückenähnlichen Einlageteile 8a-8d auf die Fliesenoberfläche einstellbar ist, oder der Flansch 4 auf die Fliesenoberfläche einstellbar ist und die Abdeckplatte 3 dann auf die Höhe des Flansches 4 gesetzt wird.

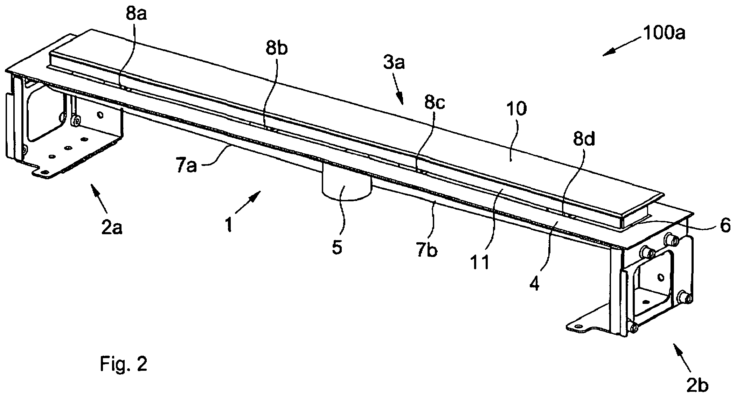

Die Fig. 2 zeigt eine weitere Ausgestaltungsvariante eines erfindungsgemäßen Ablaufrinnen-Systems 100a, das sich zu der Basis-Ausgestaltungsvariante der Fig. 1 lediglich durch eine variabel einsetzbare Abdeckplatte 3a unterscheidet. Diese Vario-Abdeckplatte 3a kennzeichnet sich durch eine Abdeckplatten-Oberseite 10 aus, die eine Abdeckplatten-Aufnahme 11 an den Seiten unterschiedlich weit überragt. Dadurch können erfindungsgemäß kleinste Fliesenverlegungsarbeiten zwischen der Abdeckplatte 3a und einer Abschlusswand eingespart werden.

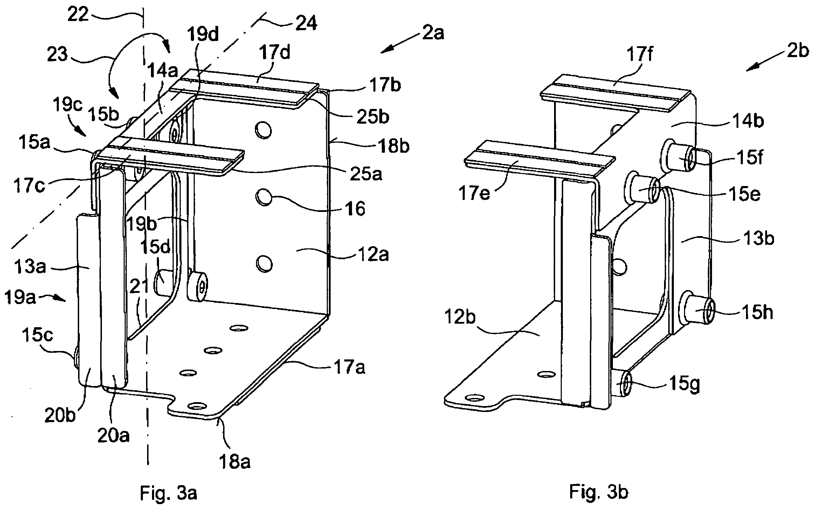

In der Fig. 3a ist der linke Sockelhalter 2a genauer dargestellt. Er besteht aus einem festen Winkelhalter 12a, einem Zwischenstück 13a, einem verstellbaren Winkelhalter 14a und vier Schraubverbindungen 15a-15d. Der feste Winkelhalter 12a weist Bohrungen 16 auf, die an einer unteren Klebefläche 18a von einem Montageband 17a und an einer seitlichen Klebefläche 18b von einem Montageband 17b umgeben sind. Die Bohrungen 16 gewährleisten einerseits verbesserte Klebeeigenschaften der Klebeflächen 18a und 18b, andererseits aber auch die Möglichkeit, bei bereits positioniertem Sockelhalter 2a bzw. 2b den Kleber durch die Bohrungen 16 zu applizieren.

Des Weiteren weist der feste Winkelhalter 12a Langlöcher 19a und 19b auf, in denen die Schraubverbindungen 15c und 15d zu dem Zwischenstück 13a in gelöstem Zustand entlanggleiten können, entsprechend einer vertikalen Achse 22. Die Langlöcher 19a und 19b und die entsprechenden Langlöcher in dem Zwischenstück 13a sind mit einem Spiel ausgestattet, sodass sich auch eine begrenzte Schwenkbarkeit gemäß einer Schwenkrichtung 23 ergibt. Der feste Winkelhalter 12a weist weiterhin einen Schutzbug 20a sowie eine Montageöffnung 21 auf, durch die wahlweise ein seitlich angeordneter Siphon-Abfluss geführt werden kann. Der Schutzbug 20a verhindert, dass flüssiger Beton oder Mörtel oder Kleber an die Schraubverbindungen 15a-15d bzw. an die Montageöffnung 21 gelangt. Der gleiche Schutz kann erreicht werden, indem der Sockelhalter 2a oder 2b beispielsweise mit einem Styropor-Block eingekleidet wird und gegebenenfalls auf der gewünschten Einstellhöhe von Stützflächen 25a bzw. 25b für die Unterseite des Flansches 4 abgeschnitten wird.

Auch das Zwischenstück 13a weist die entsprechende Montageöffnung 21 auf und auch einen entsprechenden Schutzbug 20b. Des Weiteren weist das Zwischenstück 13a zwei Langlöcher 19c und 19d auf, in denen die Schraubverbindungen 15a und 15b, sofern gelöst, eine Verschiebung des verstellbaren Winkelhalters 14a entlang einer annähernd horizontalen Achse 24 erlauben.

Der verstellbare Winkelhalter 14a bildet zwei Stützflächen 25a und 25b aus, auf die die Ablaufrinne 3 aus der Fig. 1 oder die Ablaufrinne aus der Fig. 2 aufgelegt wird. Diese Stützflächen 25a und 25b sind zur Schallentkoppelung mit Montagebändern 17c und 17d beklebt. Die Stützflächen 25a und 25b können optional auch Nivellierschrauben aufweisen.

Die Fig. 3b zeigt den rechten Sockelhalter 2b, der spiegelverkehrt zu dem Sockelhalter 2a aus der Fig. 3a ausgestaltet ist, mit entsprechenden Einzelbauteilen fester Winkelhalter 12b, Zwischenstück 13b, verstellbarer Winkelhalter 14b, Schraubverbindungen 15e-15h, sowie Montagebänder 17e und 17f.

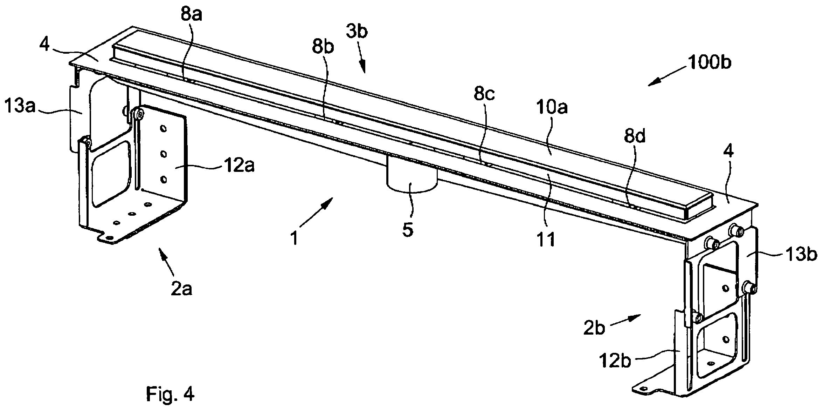

Die Fig. 4 zeigt eine dritte Ausgestaltungsvariante eines erfindungsgemäßen Ablaufrinnen-Systems 100b, das sich durch eine Abdeckplatte 3b mit einer Abdeckplatten-Oberseite 10a auszeichnet, die die Abdeckplatten-Aufnahme 11 an beiden Längsseiten nur geringfügig überragt. Des Weiteren zeigt die Fig. 4 den linken Sockelhalter 2a bzw. den festen Winkelhalter 12a und das Zwischenstück 13a und den rechten Sockelhalter 2b bzw. den festen Winkelhalter 12b und das Zwischenstück 13b in maximal ausgefahrenem Zustand.

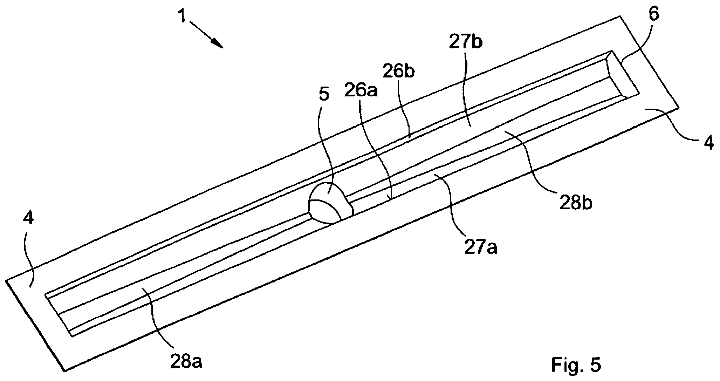

In der Fig. 5 ist die erfindungsgemäße Ablaufrinne 1 aus den Figuren 1, 2 und 4 alleine dargestellt. Die Vertiefung 6 ist aus zwei gegenüberliegenden annähernd senkrechten Stützflächen 26a und 26b, zwei daran angrenzenden schrägen Stützflächen 27a und 27b und zwei in einem jeweiligen Querschnitt betrachtet annähernd waagerecht schließenden Abflussflächen 28a und 28b. Diese Abflussflächen 28a und 28b bilden spiegelbildlich zu dem Abflussstutzen 5 ein Gefälle aus und laufen gleichzeitig vorzugsweise spitz zu dem Abflussstutzen 5 zu.

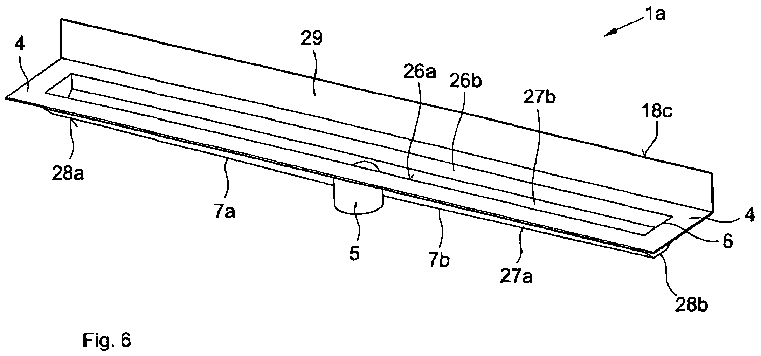

Die Fig. 6 zeigt eine erste Ausgestaltungsvariante einer weiterhin erfindungsgemäßen Ablaufrinne 1a, die einen an einer Längsseite des Flansches 4 annähernd senkrecht aufragenden Aufbug 29 aufweist. Dieser Aufbug 29 bietet, je nach Einbausituation, an seiner Rückseite eine weitere Klebefläche 18c und an seiner Vorderseite eine Fläche, die befliest werden kann.

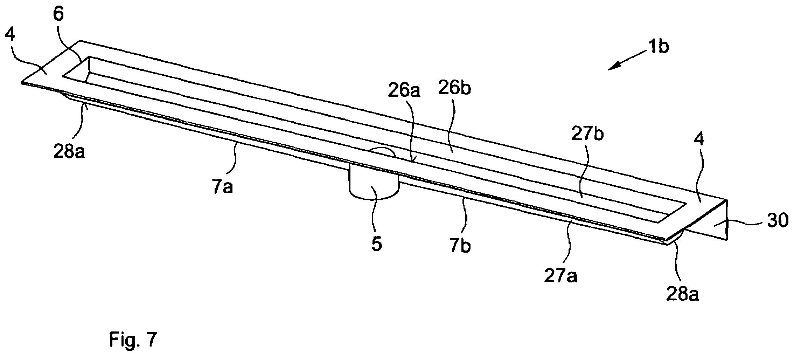

In der Fig. 7 ist eine zweite Ausgestaltungsvariante einer weiterhin erfindungsgemäßen Ablaufrinne 1b dargestellt, die einen Abbug 30 aufweist.

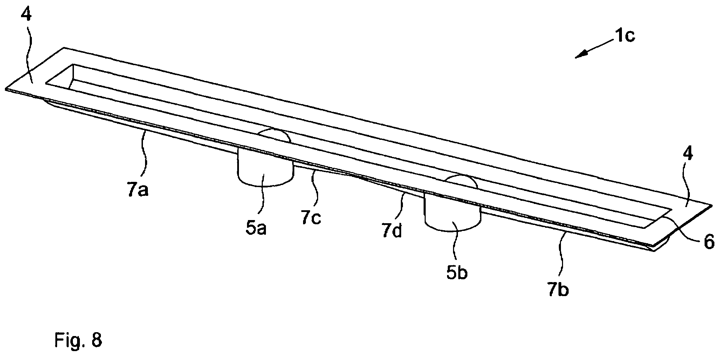

In der Fig. 8 ist eine weiterhin erfindungsgemäße Ausgestaltungsvariante einer Ablaufrinne 1c mit zwei Abflussstutzen 5a und 5b gezeigt. Rinnen-Unterseiten 7c und 7d, die sich zu der Mitte der Ablaufrinne 1c verjüngen, zeigen, dass von der Mitte der Ablaufrinne 1c zu den Abflussstutzen 5a und 5b spiegelbildlich ein Gefälle ausgebildet ist.

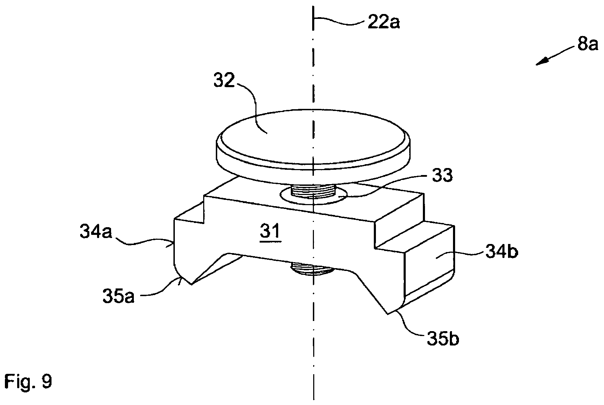

Die Fig. 9 zeigt das in den Figuren 1, 2 und 4 lediglich angedeutete brückenähnliche Einlageteil 8a, das im Wesentlichen aus einem Steg 31 und einer Nivellierschraube mit flachem Auflage-Kopf 32 besteht, wobei die Letztere in einem Gewinde 33 bzw. vorzugsweise in einer eingelassenen Gewindehülse 33 verschraubt ist und somit durch Drehungen entlang einer vertikalen Achse 22a höhenverstellbar. Der Steg 31 weist zwei gegenüberliegende annähernd senkrechte Einlageteil-Stützflächen 34a und 34b, sowie zwei gegenüberliegende schräge Einlageteil-Stützflächen 35a und 35b auf.

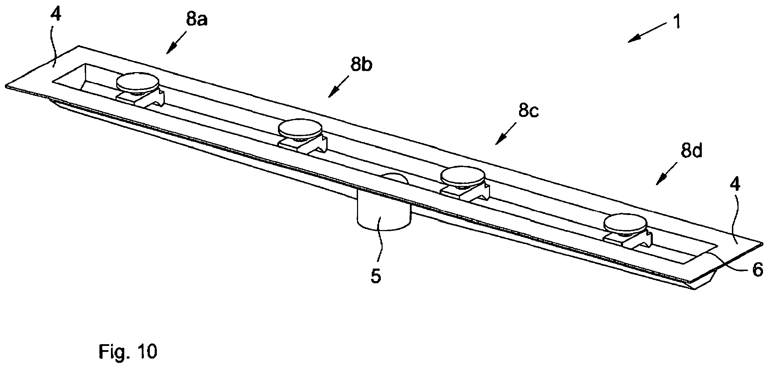

In der Fig. 10 ist dargestellt, wie beispielsweise vier brückenähnliche Einlageteile 8a-8d in die Ablaufrinne 1 eingelegt sind, sodass eine Abdeckplatte darübergestülpt werden kann.

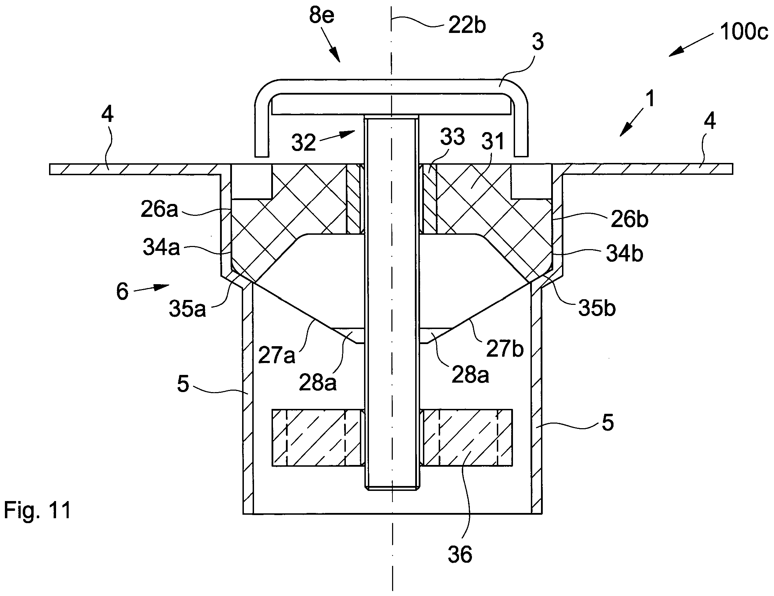

Die Fig. 11 zeigt eine weitere Ausgestaltungsvariante eines erfindungsgemäßen Ablaufrinnen-Systems 100c, das sich dadurch kennzeichnet, dass zentral über dem Abflussstutzen 5 ein brückenähnliches Einlageteil 8e mit einem entsprechend langen Gewinde als Nivellierschraube mit flachem Auflage-Kopf 32 angeordnet ist. An dem unteren Teil dieses Gewindes ist ein Abflusssieb 36 aufschraubbar. Somit ergibt sich eine Höhenverstellbarkeit des Abflusssiebes 36 entlang einer vertikalen Achse 22b. Auf diese Weise ergibt sich eine kontaktfreie, den Abfluss des Duschwassers nicht behindernde Positionierungsmöglichkeit des Abflusssiebes 36, die gleichzeitig das Hineinfallen von Wertgegenständen in den Abfluss 5 verhindert.

Des Weiteren zeigt die Fig. 11, wie sich das brückenähnliche Einlageteil 8e auf der Ablaufrinne 1 abstützt, nämlich indem die senkrechten Einlageteil-Stützflächen 34a und 34b des brückenähnlichen Einlageteils 8e zwischen den senkrechten Stützflächen 26a und 26b der Ablaufrinne 1 eingeklemmt sind und indem die schrägen Einlageteil-Stützflächen 35a und 35b des brückenähnlichen Einlageteils 8e sich nur auf dem oberen Bereich der schrägen Stützflächen 27a und 27b der Ablaufrinne 1 abstützen. Hierbei bleibt erfindungsgemäß die durch den unteren Bereich der schrägen Stützflächen 27a und 27b und durch die Abflussfläche 28a der Ablaufrinne 1 gebildete Vertiefung 6 frei für ungehinderten Abfluss von Duschwasser, bei brückenähnlichen Einlageteilen 8a-8d ohne Abflusssieb 36 gemäß den Figuren 1, 2, 4, 9 und 10 umso mehr.

### Bezugszeichenliste

1, 1a-1c - Ablaufrinne
2a, 2b - Sockelhalter
3, 3a, 3b - Abdeckplatte
4 - Auflagefläche, Flansch
5, 5a, 5b - Abflussstutzen, Ablaufstutzen, Ablaufrohr
6 - Vertiefung
7a-7d - Rinnen-Unterseite
8a-8e - brückenähnliches Einlageteil
9a, 9b - Abfluss-Spalt
10, 10a - Abdeckplatten-Oberseite
11 - Abdeckplatten-Aufnähme
12a, 12b - fester Winkelhalter
13a, 13b - Zwischenstück
14a, 14b - verstellbarer Winkelhalter
15a-15h - Schraubverbindung
16 - Bohrung
17a-17f - Montageband
18a-18c - Klebefläche
19a-19d - Langloch
20a, 20b - Schutzbug
21 - Montageöffnung
22, 22a, 22b - vertikale Achse
23 - Schwenkrichtung
24 - horizontale Achse
25a, 25b - Stützfläche
26a, 26b - senkrechte Stützfläche von 1
27a, 27b - schräge Stützfläche von 1
28a, 28b - Abflussfläche
29 - Aufbug
30 - Abbug
31 - Steg
32 - Nivellierschraube mit Auflagerondell bzw. mit Auflage-Vieleck bzw. mit Auflage-Kopf
33 - Gewinde, Gewindehülse
34a, 34b - senkrechte Einlageteil-Stützfläche von 8
35a, 35b - schräge Einlageteil-Stützfläche von 8
36 - Abflusssieb, Siebkorb
100, 100a-100d - Ablaufrinnen-System

## Patentansprüche

1. Ablaufrinnen-System (100, 100a-100d), eine Ablaufrinne (1, 1a-1c), mindestens ein brückenähnliches Einlageteil (8a-8e) und eine Abdeckplatte (3, 3a-3b) umfassend, wobei die Ablaufrinne (1, 1a-1c) im Querschnitt eine Vertiefung (6) mit zwei gegenüberliegenden, senkrechten Stützflächen (26a, 26b) und zwei V-förmig zulaufenden schrägen Stützflächen (27a, 27b) aufweist,
wobei eine Nivellierschraube mit Auflage-Kopf (32) in einem Gewinde (33) des brückenähnlichen Einlageteils (8a-8e) eine höhenverstellbare Auflage für die Abdeckplatte (3, 3a-3b) ist, **dadurch gekennzeichnet, dass** die Ablaufrinne (1, 1a- 1c) eine Abflussfläche (28a, 28b) aufweist, wobei die Abflussfläche (28a, 28b) die V-förmig zulaufenden schrägen Stützflächen (27a, 27b) der Ablaufrinne (1, 1a-1c) im Querschnitt horizontal abstumpft und zu mindestens einem Abflussstutzen (5, 5a, 5b) hin geneigt ist,
und dass das brückenähnliche Einlageteil (8a-8e) mit senkrechten Einlageteil-Stützflächen (34a, 34b) an die senkrechten Stützflächen (26a, 26b) der Ablaufrinne (1, 1a-1c) und mit schrägen Einlageteil-Stützflächen (35a, 35b) auf einen oberen Bereich der schrägen Stützflächen (27a, 27b) der Ablaufrinne (1, 1a-1c) einlegbar ist.

2. Ablaufrinnen-System (100, 100a-100d) nach Anspruch 1, **dadurch gekennzeichnet, dass** sich die Abflussfläche (28a, 28b) zu dem Abflussstutzen (5, 5a, 5b) hin spitz zulaufend verschmälert.

3. Ablaufrinnen-System (100, 100a-100d) nach einem der vorhergehenden Ansprüche, **dadurch gekennzeichnet, dass** die Ablaufrinne (1, 1a-1c) mindestens einen an den senkrechten Stützflächen (26a, 26b) angrenzenden horizontalen Flansch (4) aufweist.

4. Ablaufrinnen-System (100, 100a-100d) nach Anspruch 3, **dadurch gekennzeichnet, dass** die Ablaufrinne (1, 1a-1c) mindestens einen an dem horizontalen Flansch (4) angrenzenden vertikalen Aufbug (29) oder/und mindestens einen an dem horizontalen Flansch (4) angrenzenden vertikalen Abbug (30) aufweist.

5. Ablaufrinnen-System (100, 100a-100d) nach einem der vorhergehenden Ansprüche, **dadurch gekennzeichnet, dass** die senkrechten Stützflächen (26a, 26b) der Ablaufrinne (1, 1a-1c) eine Stecknut aufweisen, in die eine an den senkrechten Einlageteil-Stützflächen (34a, 34b) des brückenähnlichen Einlageteils (8a-8e) angeordnete Feder einsteckbar ist.

6. Ablaufrinnen-System (100, 100a-100d) nach einem der vorhergehenden Ansprüche, **dadurch gekennzeichnet, dass** die Abdeckplatte (3, 3a, 3b) eine U-förmig ausgestaltete Abdeckplatten-Aufnähme (11) aufweist, die auf die Nivellierschraube mit Auflage-Kopf (32) aufstülpbar ist.

7. Ablaufrinnen-System (100a) nach Anspruch 6, **dadurch gekennzeichnet, dass** die Abdeckplatte (3, 3a, 3b) eine Abdeckplatten-Oberseite (10) aufweist, die die Abdeckplatten-Aufnahme (11) an ihren Längsseiten unterschiedlich weit überragt.

8. Ablaufrinnen-System (100, 100a-100d) nach einem der vorhergehenden Ansprüche, **dadurch gekennzeichnet, dass** das brückenähnliche Einlageteil (8a-8e) einen Steg (31) umfasst, der aus einem elastischen Kunststoff oder Gummi besteht und dass das Gewinde (33) eine in den elastischen Kunststoff oder Gummi eingelassene Gewindehülse (33) ist.

9. Ablaufrinnen-System (100c) nach einem der vorhergehenden Ansprüche, **dadurch gekennzeichnet, dass** das Ablaufrinnen-System (100c) ein Abflusssieb (36) umfasst, das an einem verlängerten Gewinde des brückenähnlichen Einlageteils (8e) aufschraubbar ist.

10. Ablaufrinnen-System (100c) nach einem der Ansprüche 1-8, **dadurch gekennzeichnet, dass** das Ablaufrinnen-System (100c) ein Abflusssieb (36) umfasst, das an einer zweiten Schraube oder Gewindestange verschraubbar ist, die in einer zweiten Gewindebohrung des brückenähnlichen Einlageteils (8e) angeordnet ist.

11. Ablaufrinnen-System (100, 100a-100d) nach Anspruch 9 oder 10, **dadurch gekennzeichnet, dass** das Ablaufrinnen-System (100, 100a-100c) mindestens ein Dreier-Set von brückenähnlichen Einlageteilen (8a-8e) umfasst, bestehend aus zwei brückenähnlichen Einlageteilen (8a-8d) gemäß den Ansprüchen 1-8 und aus einem brückenähnlichen Einlageteil (8e) gemäß Anspruch 9 oder 10.

12. Ablaufrinnen-System (100, 100a-100d) nach einem der vorhergehenden Ansprüche 4-11 sofern abhängig von Anspruch 3, **dadurch gekennzeichnet, dass** die Ablaufrinne (1, 1a-1c) mit der Unterseite des Flansches (4) auf mindestens einen mehrteiligen Sockelhalter (2a, 2b) auflegbar ist, der mittels in Langlöchern (19a-19d) geführten Schraubverbindungen (15a-15d) entlang einer vertikalen Achse (22) und entlang einer horizontalen Achse (24) verstellbar ist.

13. Ablaufrinnen-System (100, 100a-100d) nach Anspruch 12, **dadurch gekennzeichnet, dass** der mehrteilige Sockelhalter (2a, 2b) durch Spiel in den Langlöchern (19a-19d) entlang einer Schwenkachse (23) begrenzt schwenkbar ist.

14. Ablaufrinnen-System (100, 100a-100d) nach einem der vorhergehenden Ansprüche, **dadurch gekennzeichnet, dass** ein Siphongehäuse in das Ablaufrinnen-System (100, 100a-100d) integriert ist.

15. Ablaufrinnen-System (100, 100a-100d) nach einem der vorhergehenden Ansprüche 5- 14 sofern abhängig von Anspruch 3 oder 4, **dadurch gekennzeichnet, dass** der Flansch (4) und/oder der oder die Aufbüge (29) und/oder der oder die Abbüge (30) Bohrungen aufweisen.

16. Ablaufrinnen-System (100, 100a-100d) nach einem der vorhergehenden Ansprüche 5-15 sofern abhängig von Anspruch 4, sofern dieser abhängig von Anspruch 3, **dadurch gekennzeichnet, dass** die Unterseite des Flansches (4) und/oder Klebeflächen (18c) des Aufbuges (29) und des Abbuges (30) Haftungsverstärkungen aufweisen, beispielsweise in Form von Klettbändern.

## Claims

1. Drainage gutter system (100, 100a-100d) comprising a drainage gutter (1, 1a-1c), at least one bridge-like insert part (8a-8e) and a cover plate (3, 3a-3b), wherein the drainage gutter (1, 1a-1c) features in cross-section a recess (6) with two opposite, vertical support surfaces (26a, 26b) and two V-shaped tapering inclined support surfaces (27a, 27b), wherein a levelling screw with a support head (32) in a thread (33) of the bridge-like insert part (8a-8e) is a height-adjustable support for the cover plate (3, 3a-3b), **characterised in that** the drainage gutter (1, 1a-1c) features a drainage surface (28a, 28b), wherein the drainage surface (28a, 28b) blunts horizontally in cross-section the V-shaped inclined support surfaces (27a, 27b) of the drainage gutter (1, 1a-1c) and is inclined towards at least one discharge nozzle (5, 5a, 5b), **and that** the bridge-like insert (8a-8e) is insertable with vertical insert-part support surfaces (34a, 34b) to the vertical support surfaces (26a, 26b) of the drainage gutter (1, 1a-1c) and with inclined insert part support surfaces (35a, 35b) on an upper region of the inclined support surfaces (27a, 27b) of the drainage gutter (1, 1a-1c).

2. Drainage gutter system (100, 100a-100d) according to claim 1, **characterised in that** the drainage surface (28a, 28b) narrows tapering towards the discharge nozzle (5, 5a, 5b).

3. Drainage gutter system (100, 100a-100d) according to one of the preceding claims, **characterised in that** the drainage gutter (1, 1a-1c) has at least one horizontal flange (4) adjacent to the vertical support surfaces (26a, 26b).

4. Drainage gutter system (100, 100a-100d) according to claim 3, **characterised in that** the gutter (1, 1a-1c) has at least one vertical upward bend (29) adjacent to the horizontal flange (4) and/or at least one vertical downward bend (30) adjacent to the horizontal flange (4).

5. Drainage gutter system (100, 100a-100d) according to one of the preceding claims, **characterised in that** the vertical support surfaces (26a, 26b) of the drainage gutter (1, 1a-1c) feature a plug-in groove into which, on the vertical insert-part support surfaces (34a, 34b) of the bridge-like insert part (8a-8e), a spring is insertably arranged.

6. Drainage gutter system (100, 100a-100d) according to one of the preceding claims, **characterised in that** the cover plate (3, 3a, 3b) features an U-shaped cover plate acceptance (11) which is placeable over the levelling screw with support head (32).

7. Drainage gutter system (100a) according to claim 6, **characterised in that** the cover plate (3, 3a, 3b) features a cover plate upper side (10) which projects beyond the cover plate acceptance (11), protrudes to different extents on its long sides.

8. Drainage gutter system (100, 100a-100d) according to one of the preceding claims, **characterised in that** the bridge-like insert (8a-8e) comprises a crosspiece (31) which is made of an elastic plastic or rubber and that the thread (33) is a threaded sleeve (33) embedded in the elastic plastic or rubber.

9. Drainage gutter system (100c) according to one of the preceding claims, **characterised in that** the drainage gutter system (100c) comprises a drainage sieve (36) which is screwable onto an extended thread of the bridge-like insert part (8e).

10. Drainage gutter system (100c) according to one of the claims 1-8, **characterised in that** the drainage gutter system (100c) comprises a drainage sieve (36) which is screwable to a second screw or threaded rod arranged in a second threaded hole of the bridge-like insert (8e).

11. Drainage gutter system (100, 100a-100d) according to claim 9 or 10, **characterised in that** the drainage gutter system (100, 100a-100c) comprises at least one triple set of bridge-like insert parts (8a-8e) consisting of two bridge-like insert parts (8a-8d) according to claims 1-8 and one bridge-like insert part (8e) according to claim 9 or 10.

12. Drainage gutter system (100, 100a-100d) according to one of the preceding claims 4-11, if dependent on claim 3, **characterised in that** the drainage gutter (1, 1a-1c) is applicable with the underside of the flange (4) on at least one multi-part base holder (2a, 2b), which is adjustable along a vertical axis (22) and along a horizontal axis (24) by means of screw connections (15a-15d) guided in elongated holes (19a-19d).

13. Drainage gutter system (100, 100a-100d) according to claim 12, **characterised in that** the multi-part base holder (2a, 2b) is pivotable to a limited extent by play in the elongated holes (19a-19d), along a pivot axis (23).

14. Drainage gutter system (100, 100a-100d) according to one of the preceding claims, **characterised in that** a siphon housing is integrated into the drainage gutter system (100, 100a-100d).

15. Drainage gutter system (100, 100a-100d) according to one of the preceding claims 5-14, if dependent on claim 3 or 4, **characterised in that** the flange (4) and/or the upward bend or upward bends (29) and/or the downward bend or downward bends (30) feature holes.

16. Drainage gutter system (100, 100a-100d) according to one of the preceding claims 5-15, if dependent on claim 4, if this dependent on claim 3, **characterised in that** the underside of the flange (4) and/or adhesive surfaces (18c) of the upward bend (29) and the downward bend (30) feature adhesion reinforcements, for example in the form of Velcro strips.

## Revendications

1. Système de goulottes (100, 100a-100d) comprenant une goulotte (1, 1a-1c), au moins une partie d'insertion en forme de pont (8a-8e) et une plaque de recouvrement (3, 3a-3b), dans lequel la goulotte (1, 1a-1c) présente en coupe transversale une enfonçure (6) avec deux surfaces d'appui verticales opposées (26a, 26b) et deux surfaces d'appui inclinées en forme de V (27a, 27b), où une vis de nivellement avec tête de support (32) dans un filetage (33) de la partie d'insertion en forme de pont (8a-8e) est un support réglable en hauteur pour la plaque de recouvrement (3, 3a-3b), **caractérisé en ce que** la goulotte (1, 1a-1c) présente une surface d'écoulement (28a, 28b), où la surface d'écoulement (28a, 28b) émousse horizontalement en coupe transversale les surfaces d'appui inclinées en forme de V (27a, 27b) de la goulotte (1, 1a-1c) et est inclinée vers au moins un raccord de drainage (5, 5a, 5b), et **en ce que** la partie d'insertion en forme de pont (8a-8e) est insérable avec des surfaces d'appui verticales de la partie d'insertion (34a, 34b) sur les surfaces d'appui verticales (26a, 26b) de la goulotte (1, 1a-1c) et avec des surfaces d'appui obliques de la partie d'insertion (35a, 35b) sur une zone supérieure des surfaces d'appui obliques (27a, 27b) de la goulotte (1, 1a-1c).

2. Système de goulottes (100, 100a-100d) selon la revendication 1, **caractérisé en ce que** la surface d'écoulement (28a, 28b) se rétrécit en pointe vers le raccord de drainage (5, 5a, 5b).

3. Système de goulottes (100, 100a-100d) selon l'une des revendications précédentes, **caractérisé en ce que** la goulotte (1, 1a-1c) a au moins une bride (4) horizontale adjacente aux surfaces d'appui verticales (26a, 26b).

4. Système de goulottes (100, 100a-100d) selon la revendication 3, **caractérisé en ce que** la goulotte (1, 1a-1c) présente au moins un coude ascendant (29) vertical adjacent à la bride horizontale (4) et/ou au moins un coude descendant (30) vertical adjacent à la bride horizontale (4).

5. Système de goulottes (100, 100a-100d) selon l'une des revendications précédentes, **caractérisé en ce que** les surfaces d'appui verticales (26a, 26b) de la goulotte (1, 1a-1c) présentent une rainure d'enfichage dans laquelle est insérable un ressort disposé sur les surfaces d'appui verticales (34a, 34b) de la partie d'insertion en forme de pont (8a-8e).

6. Système de goulottes (100, 100a-100d) selon l'une des revendications précédentes, **caractérisé en ce que** la plaque de recouvrement (3, 3a, 3b) présente un logement de plaque de recouvrement (11) en forme de U enfonçable sur la vis de nivellement à tête de support (32).

7. Système de goulottes (100a) selon la revendication 6, **caractérisé en ce que** la plaque de recouvrement (3, 3a, 3b) présente une face supérieure de plaque de recouvrement (10) qui dépasse le logement de plaque de recouvrement (11) sur ses longs côtés à des degrés différents.

8. Système de goulottes (100, 100a-100d) selon l'une des revendications précédentes, **caractérisé en ce que** la partie d'insertion en forme de pont (8a-8e) comprend une âme (31) qui consiste en une matière plastique élastique ou un caoutchouc et que le filetage (33) est une douille (33) encastrée dans la matière plastique élastique ou le caoutchouc.

9. Système de goulottes (100c) selon l'une des revendications précédentes, **caractérisé en ce que** le système de goulottes (100c) comprend une crépine de drainage (36) dévissable sur un filetage prolongé de la partie d'insertion en forme de pont (8e).

10. Système de goulottes (100c) selon l'une des revendications 1-8, **caractérisé en ce que** le système de goulottes (100c) comprend une crépine de drainage (36) vissable à une seconde vis ou tige filetée disposée dans un second trou fileté de la partie d'insertion en forme de pont (8e).

11. Système de goulottes (100, 100a-100d) selon la revendication 9 ou 10, **caractérisé en ce que** le système de goulottes (100, 100a-100c) comprend au moins un ensemble de trois parties d'insertion en forme de pont (8a-8e), composé de deux parties d'insertion en forme de pont (8a-8d) selon les revendications 1-8 et une partie d'insertion en forme de pont (8e) selon la revendication 9 ou 10.

12. Système de goulottes (100, 100a-100d) selon l'une des revendications précédentes 4-11, si dépendant de la revendication 3, **caractérisé en ce que** la goulotte (1, 1a-1c) montable avec la face inférieure de la bride (4) sur au moins un support de base en plusieurs parties (2a, 2b), qui est réglable le long d'un axe vertical (22) et le long d'un axe horizontal (24) au moyen de raccords à vis (15a-15d) guidés dans des trous oblongs (19a-19d).

13. Système de goulottes (100, 100a-100d) selon la revendication 12, **caractérisé en ce que** le support de base en plusieurs parties (2a, 2b) est pivotant dans une mesure limitée par jeu dans les trous oblongs (19a-19d) le long d'un axe de pivotement (23) .

14. Système de goulottes (100, 100a-100d) selon l'une des revendications précédentes, **caractérisé en ce qu'**un boîtier de siphon est intégré dans le système de goulottes (100, 100a-100d).

15. Système de goulottes (100, 100a-100d) selon l'une des revendications précédentes 5-14, si dépendant de la revendication 3 ou 4, **caractérisé en ce que** la bride (4) et/ou le ou les coudes ascendants (29) et/ou le ou les coudes descendants (30) ont des trous.

16. Système de goulottes (100, 100a-100d) selon l'une des revendications précédentes 5-15, si dépendant de la revendication 4, si cella dépendant de la revendication 3, **caractérisé en ce que** la face inférieure de la bride (4) et/ou les surfaces adhésives (18c) du coude ascendant (29) et du coude descendant (30) présentent des renforcements d'adhérence, par exemple sous forme de bandes Velcro.
